# EUROPÄISCHE PATENTSCHRIFT

(11) **EP 1 052 456 B1**
(45) Veröffentlichungstag und Bekanntmachung des Hinweises auf die Patenterteilung: **24.07.2002**
(21) Anmeldenummer: 00890150.6
(22) Anmeldetag: 11.05.2000
(51) Int. Cl.: F23K 3/02, B65G 53/26

(54) **Saugförderanlage für ein Heizanlage**
Pneumatic feeding device for heating installation
Système d'alimenttion pneumatique pour installation de chauffage

(30) Priorität: 12.05.1999 AT 33099 U
(43) Veröffentlichungstag der Anmeldung: 15.11.2000
(73) Patentinhaber: WINDHAGER ZENTRALHEIZUNG AG, 5201 Seekirchen a. W. (AT)
(72) Erfinder: Haubenwaller, Hans, 5201 Seekirchen (AT)
(74) Vertreter: Babeluk, Michael, Dipl.-Ing. Mag.

(56) Entgegenhaltungen:
- EP-A- 0 305 152
- WO-A-84/00600
- WO-A-87/05281
- CH-A- 244 224
- US-A- 1 915 750
- US-A- 3 272 561
- US-A- 3 758 163
- US-A- 3 809 438
- US-A- 4 092 094
- US-A- 4 183 702
- US-A- 4 226 371
- US-A- 4 900 200

## Beschreibung

Die Erfindung betrifft eine Saugförderanlage für eine Heizanlage zur Entnahme von festem, rieselfähigem Heizmaterial, insbesondere Brennstoff-Pellets, aus einem Heizmateriallager, mit einer Saugturbine, welche das Heizmaterial mittels einer Saugleitung über zumindest eine Saugöffnung ansaugt und über einen Zyklonabscheider einem Heizkessel oder einem Zwischenlagerbehälter zuführt, und einer Rücklaufleitung, welche im Bereich der Saugöffnung in das Heizmateriallager einmündet (siehe WO-A-8 705 281).

Aus der DE 22 08 879 A ist eine automatische Beschickungsanlage für eine Späneverbrennungseinrichtung bekannt, wobei die Späne durch einen Transportventilator und Verbindungsleitungen einen Zyklon zugeführt werden, dessen Austragsrohr mit der Verbrennungseinrichtung in Verbindung steht. Das Fördergut wird dabei über eine Förderschnecke aus einem Spänebunker ausgetragen und der Ansaugseite des Transportventilators zugeführt. Diese Beschickungsanlage hat den Nachteil, dass zwei verschiedene hintereinander geschaltete Fördereinrichtungen erforderlich sind. Über die Förderschnecke kann Material nur in einen fixen Entnahmebereich in Bodennähe des Lagerraumes entnommen werden. Eine vollständige Leerung des Lagerraumes ist relativ aufwendig, da entweder mehrere Förderschnecken erforderlich sind, oder der Brennstoff manuell zur Eintrittsöffnung der Förderschnecke befördert werden muss. Ein weiterer Nachteil von Förderschnecken ist, dass Brennstoff-Pellets leicht beschädigt werden können.

Aus der DE 23 46 281 A1 ist eine pneumatische Saugförderanlage für die Förderung hygroskopischen Massenguts mit einem Doppelmantel-Saugrohr bekannt, wobei die Abluft eines Sauggebläses zur Erwärmung des Saugrohres im Außenmantel zum Saugkopf zurückgeführt und zum Teil wieder angesaugt wird. Der Außenmantel des Saugrohrsystemes endet dabei oberhalb der Zuiuftdüse des Saugkopfes. Die rückgeführte Luft trägt dadurch nur unwesentlich zur Auflockerung des noch zu fördernden Materiales bei. Zweck dieser bekannten Luftrückführung ist es, das Verklumpen und Anhaften von Fördergut in der Saugförderleitung zu verhindern. Die Auflockerung des Fördermateriales erfolgt über separate mit Antriebsmotoren betriebene Zuteilscheiben im Saugkopf, die für das Zuführen des Fördergutes zum Saugkopf sorgen. Auch aus der US 2 783 098 A ist eine Saugdüse bekannt, welche ein von einem Motor angetriebenen Rotor aufweist, um Verklumpungen im zu fördernden Material aufzulösen. Derartige mechanische Auflockerungseinrichtungen sind allerdings aufwendig und erfordern erhöhten Platzbedarf.

Aufgabe der Erfindung ist es, diese Nachteile zu vermeiden und eine Saugförderanlage bereitzustellen, mit welcher auf möglichst einfache Weise eine zuverlässige Entnahme von Heizmaterial aus einem Heizmateriallager gewährleistet ist. Das Heizmaterial soll aufgelockert und die Zuluftversorgung zum Heizmateriallager Sichergestellt werden.

Erfindungsgemäß erfolgt dies dadurch dass die Saugleitung in den Zyklonabscheide mündet, der über eine Leitung mit der Ansaugseite der Saugturbine verbunden ist, und die Rücklaufleitung dass in die Ausgangsseite der Saugturbine eine Rückluftleitung angeschlossen ist. Dadurch wird auf einfache Weise eine Auflockerung des zu fördernden Heizmaterials ohne weitere aufwendige mechanische Auflockerungseinrichtungen erreicht. Vorzugsweise ist die Saugförderanlage als Umluftsystem ausgebildet, wodurch keine separate Zuluft zum Heizmateriallager erforderlich ist.

In einer besonders einfachen Ausführungsvariante ist vorgesehen, dass die Saugförderanlage filterlos ausgeführt ist. Durch die Umluftführung braucht die Abluft von der Saugturbine nicht gefiltert werden, da der Reststaub in der Abluft wieder zusammen mit dem zu fördernden Heizmaterial angesaugt wird. Die somit wegfallende Filterreinigung, welche bei bisherigen Anlagen durch die relativ kurze Standzeit der Filter von 3-4 Wochen mit vergleichsweise hohem Arbeits- und Zeitaufwand verbunden war, entfällt.

In einer besonders bevorzugten Ausführungsvariante der Erfindung ist vorgesehen, dass in der Saugleitung ein Umschaltventil angeordnet ist, über welches eine Hauptsaugleitung wahlweise mit zumindest einer von mehreren Zweigsaugleitungen verbindbar ist, wobei jede Zweigsaugleitung zumindest eine Saugöffnung aufweist und die Saugöffnungen in verschiedenen Bereichen des Heizmateriallagers angeordnet sind. Dies ermöglicht einen gleichmäßigeren Materialaustrag aus dem Heizmateriallager, wobei nur jene Zweigsaugleitungen eingeschaltet werden, in deren Saugöffnungsbereich genügend Heizmaterial verfügbar ist. Analog dazu kann auch vorgesehen sein, dass in der Rückluftleitung ein Umschaltventil angeordnet ist, über welches eine Hauptrückluftleitung wahlweise mit zumindest einer von mehreren Zweigrückluftleitungen verbindbar ist, wobei jede Zweigrückluftleitung zumindest eine Mündungsöffnung aufweist und die Mündungsöffnungen in verschiedenen Bereichen des Heizmateriallagers angeordnet sind.

In einer besonders bevorzugten Ausführung der Erfindung ist vorgesehen, dass das Umschaltventil als Drehschieber ausgebildet ist und über den Drehschieber sowohl die Zweigsaugleitungen, als auch die Zweigrückluftleitungen umschaltbar sind, wobei der Drehschieber eine Ventilplatte mit zwei vorzugsweise diametral gegenüberliegenden Öffnungen aufweist, von denen in zumindest einer Schieberstellung eine erste Öffnung fluchtend mit einer Zweigsaugleitung und eine zweite Öffnung fluchtend mit einer Zweigrückluftleitung zur Verbindung mit der Hauptsaugleitung bzw. Hauptrückluftleitung ausgebildet ist. Dadurch kann einfach und sicher sowohl zwischen mehreren Saugöffnungen, als auch mehreren Mündungsöffnungen, umgeschaltet werden.

In Weiterbildung der Erfindung ist vorgesehen, dass die Saugöffnung und die Mündungsöffnung in einer am Boden des Heizmateriallagers befestigten Ansaugsonde angeordnet sind.

Besonders vorteilhaft zur Erreichung einer zuverlässigen Materialentnahme ist es, wenn die Mündungsöffnung über der Saugöffnung in einem eine Überdachung aufweisenden Bereich der Ansaugsonde angeordnet ist.

Vorteilhafterweise ist vorgesehen, dass der Zyklonabscheider in einen Sammelbehälter einmündet, welcher über eine Entleerungsklappe mit einem Zwischenlagerbehälter, vorzugsweise einem Zwei-Tagesbehälter, verbunden ist, wobei besonders vorzugsweise im Bereich einer Ausgangsöffnung des Zwischenlagerbehälters eine Dosierschnecke angeordnet ist, welche das Heizmaterial einem Brennertopf zuführt. Die Beschickung des Zwei-Tagesbehälters durch die Saugturbine erfolgt dabei in relativ kurzen Zeitintervallen, beispielsweise über eine Förderdauer von 3 mal 50 Sekunden pro Tag. Die Entleerungsklappe wird während des Betriebes der Saugturbine durch den auftretenden Unterdruck geschlossen. Bei Stillstand der Saugturbine wird sie durch das Gewicht des Heizmateriales geöffnet, wodurch sich das Heizmaterial in den Zwischenbehälter entleert. Zyklonabscheider, Saugturbine und Sammelbehälter sind vorzugsweise in einem gemeinsamen Gehäuse angeordnet, welches auf dem Zwischenlagerbehälter aufsetzbar ist. Das Gehäuse kann somit auf bestehende Heizkessel aufgesetzt werden.

Die Erfindung wird im folgenden anhand der Figuren näher erläutert. Es zeigen
- Fig. 1: eine schematische Ansicht einer erfindungsgemäßen Saugförderanlage in einer Ausführungsvariante,
- Fig. 2: die Saugförderanlage in einem Schnitt gemäß der Linie II-II in Fig. 1,
- Fig. 3: ein Umschaltventil der Saugförderanlage in einer anderen Ausführungsvariante,
- Fig. 4, 5 und 6: eine Ansaugsonde der Saugförderanlage im Aufriss, Kreuzriss und Grundriss.

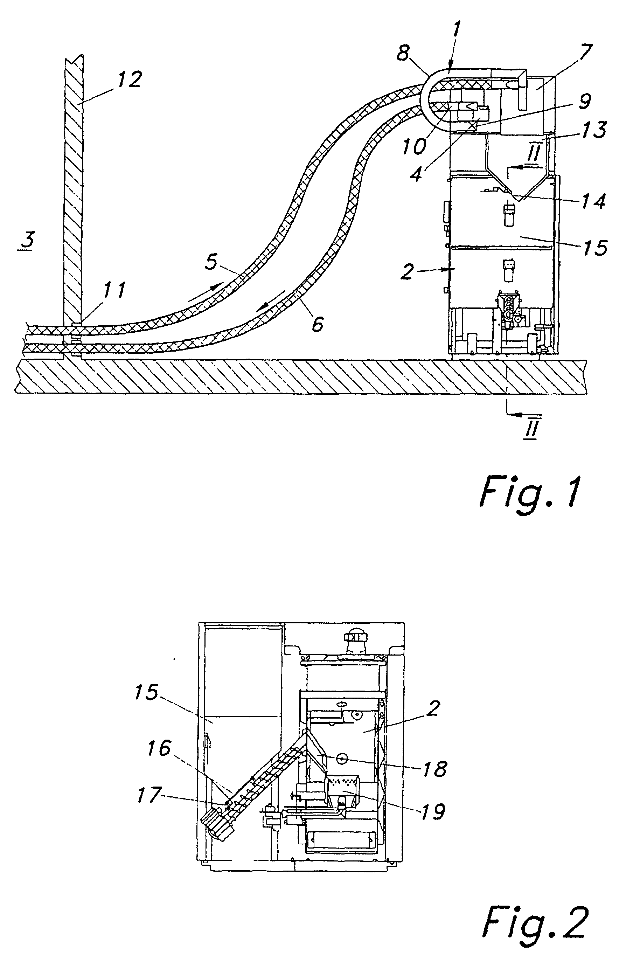

Fig. 1 zeigt eine Saugförderanlage 1 für eine Heizanlage zur Entnahme von rieselfähigem Heizmaterial, wie beispielsweise Brennstoff-Pellets, aus einem Heizmateriallager 3, wobei das Heizmaterial in einem Heizkessel 2 verfeuert wird. Die Saugförderanlage 1 weist eine Saugturbine 4, eine Saugleitung 5 und eine Rückführleitung 6 auf. Die Saugleitung 5 mündet in einen Zyklonabscheider 7, wobei der Zyklonabscheider 7 über eine Leitung 8 mit der Ansaugseite 9 der Saugturbine 4 verbunden ist. An der Ausgangsseite 10 der Saugturbine 4 ist die Rückluftleitung 6 angeschlossen. Sowohl die Saugleitung 5 als auch die Rückluftleitung 6 münden über eine Brandschutzmanschette 11 im Bereich einer Brandschutzwand 12 in das Heizmateriallager 3. Die Einmündung der Rückluftleitung 6 befindet sich dabei unmittelbar im Bereich der Saugöffnung der Saugleitung 5.

An den unteren Bereich des Zyklonabscheiders 7 schließt ein Sammelbehälter 13 an, welcher über eine Entleerungsklappe 14 mit einem als Zwei-Tagesbehälter ausgebildeten Zwischenlagerbehälter 15 verbunden ist. Im Bereich des Austrittes 16 aus dem Zwischenlagerbehälter 15 ist eine Dosierschnecke 17 angeordnet, welche das Heizmaterial über eine Fallstufe 18 dem Brenntopf 19 zuführt.

Das Heizmaterial wird durch die Saugturbine 4 über die Saugleitung 5 aus dem Heizmaterialiager 3 angesaugt und gelangt in den Zyklonabscheider 7, wo die Brennstoff-Pellets und der Staub zu etwa 99,9 % abgeschieden werden und in den unter dem Zyklonabscheider 7 liegenden Sammelbehälter 13 fallen. Der Zyklonabscheider 7 wird über die Leitung 8 durch die Saugturbine 4 abgesaugt. Die abgesaugte Luft wird über die Rückluftleitung 6 wieder in das Heizmateriallager 3 geführt, wobei die Rückluft im Bereich der Saugöffnung der Saugleitung 5 in das Heizmaterial eingeblasen wird. Durch die Rücklufteinblasung wird einerseits eine Auflockerung des Heizmateriales erreicht, und andererseits die Zuluftversorgung zum Heizmateriallager 3 sichergestellt. Es entfällt somit eine aufwendige separate mechanische Einrichtung zur Auflockerung der Brennstoff-Pellets. Auch auf eine separate Zuluftführung in das Heizmateriallager 3 kann verzichtet werden.

Die Saugförderanlage 1 ist als Umluftsystem ausgebildet. Dadurch kann die Saugturbine filterlos ausgeführt sein, was den Vorteil bringt, dass Standzeiten für Filterreinigung und Filtertausch entfallen können. Die über die Rückluftleitung 6 dem Heizmateriallager 3 zugeführte Luft enthält somit einen geringen Bestandteil an Reststaub. Der Reststaub wird aber zusammen mit den Brennstoff-Pellets wieder angesaugt und über die Saugleitung 5 dem Zyklonabscheider 7 zugeführt.

Diese Rückführung des Reststaubes verhindert, dass eine Staubkonzentration im Heizmateriallager 3 auftritt.

Während des Betriebes der Saugturbine 4 ist die Entleerungsklappe 14 infolge des innerhalb des Sammelbehälters 13 auftretenden Unterdruckes geschlossen, so dass sich die Brennstoff-Pellets im Sammelbehälter 13 sammeln. Bei Stillstand der Saugturbine wird die Entleerungsklappe 14 durch das Gewicht der Brennstoff-Pellets geöffnet und der Inhalt in den Zwischenbehälter 15 entleert. Von dem Zwischenbehälter 15 gelangt das Heizmaterial in üblicher Weise über die Dosierschnecke 17 in den Brennertopf.

Bei geeigneter Auslegung des Sammelbehälters 13 und des Zwischenlagerbehälters 15 sowie der Saugturbine 4 kann die Beschickungsdauer und die Anzahl der einzelnen Beschickungen sehr gering gehalten werden. Bei dem dargestellten Ausführungsbeispiel ist die Saugturbine 4 zeitgesteuert und schaltet je nach Förderlänge nach etwa 50 Sekunden ab.

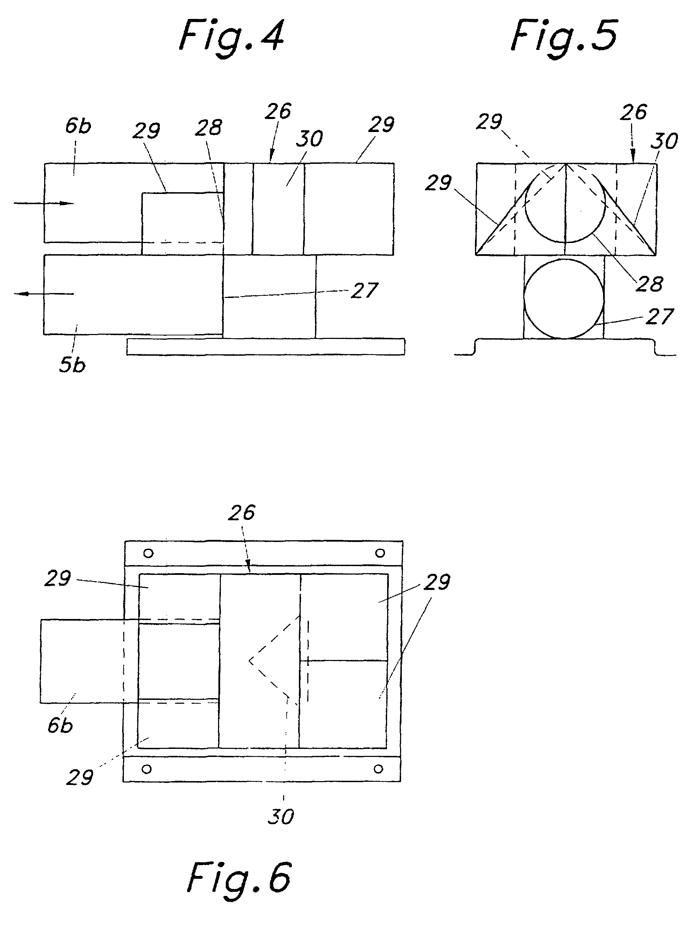

Um eine möglichst vollständige Entleerung des Heizmateriallagers 3 zu erreichen, kann ein Umschaltventil in der Saugleitung 5 vorgesehen sein, welches eine Strömungsverbindung zwischen einer Hauptsaugleitung 5a und zumindest einer von mehreren Zweigsaugleitungen 5b innerhalb des Heizmateriallagers 3 ermöglicht. Zu jeder in Fig. 4 und 5 ersichtlichen Saugöffnung 27 der einzelnen Zweigsaugleitungen 5b führt dabei eine Zweigrückluftleitung 6b, so dass eine ausreichende Auflockerung des Heizmateriales gewährleistet ist. Analog zur Hauptsaugleitung 5a ist auch eine von der Saugturbine 4 kommende Hauptrückluftleitung 6a über ein Umschaltventil mit einer von mehreren Zweigrückluftleitungen 6b verbindbar.

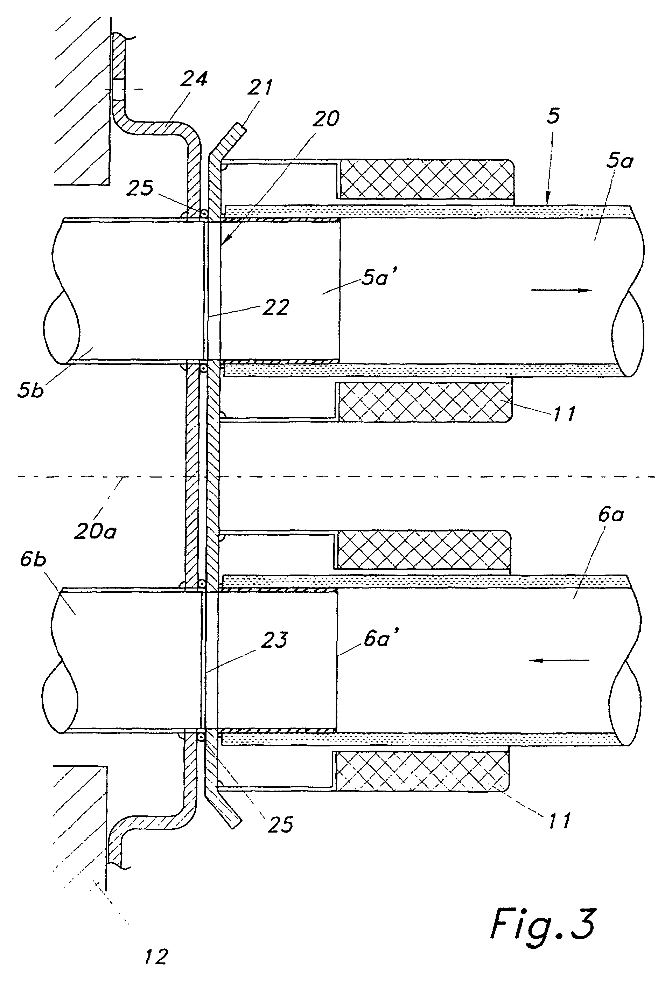

Wie in Fig. 3 dargestellt, kann das Umschaltventil als Drehschieber 20 mit einer runden Ventilplatte 21 mit einer ersten Öffnung 22 und einer zweiten Öffnung 23 ausgebildet sein. Durch Drehen der Ventilplatte 21 können erste Öffnung 22 bzw. zweite Öffnung 23 fluchtend zu einer Zweigsaugleitung 5b bzw. einer Zweigrückluftleitung 6b positioniert und damit eine Strömungsverbindung mit der Hauptsaugleitung 5a bzw. der Hauptrückluftleitung 6a hergestellt werden.

Mit einem einzigen Drehschieber 20 können somit Zweigsaugleitungen 5b und Zweigrückluftleitungen 6b zugleich gesteuert werden. Weitere Umschaltventile sind somit nicht erforderlich.

Mit 20a ist die Drehachse des Drehschiebers 20 bezeichnet. Die Tragplatte 24 fur Zweigsaugleitungen 5b und Zweigrückluftleitungen 6b ist an der Brandschutzwand 12 befestigt. Mit 11 sind wieder Brandschutzmanschetten um Hauptsaugleitung 5a bzw. Hauptrückluftleitung 6a bezeichnet.

Im Bereich der Ventilplatte 21 weisen die Leitungen 5a und 6a, welche aus Kunststoff bestehen können, Stahlrohrstücke 5a' und 6a' auf. Mit 25 sind O-Ring-Dichtungen zwischen Tragplatte 24 und Ventilplatte 21 bezeichnet.

Am Boden des Heizmateriallagers 3 sind Ansaugsonden 26 befestigt. In jeder Ansaugsonde 26 befindet sich eine Saugöffnung 27 und eine Mündungsöffnung 28, wobei die Mündungsöffnung 28 über der Saugöffnung 27 angeordnet ist, wie aus den Fig. 4 bis 6 ersichtlich ist. Im Bereich der Mündungsöffnung 28 weist die Ansaugsonde 23 eine Überdachung 29 und einen Verteilerwinkel 30 auf, um den ungehinderten Austritt der Rückluft zu ermöglichen.

## Patentansprüche

1. Saugförderanlage (1) für eine Heizanlage zur Entnahme von festem, rieselfähigem Heizmaterial, insbesondere Brennstoff-Pellets, aus einem Heizmateriallager (3), mit einer Saugturbine (4), welche das Heizmaterial mittels einer Saugleitung (5) über zumindest eine Saugöffnung (27) ansaugt und über einen Zyklonabscheider (7) einem Heizkessel (2) oder einem Zwischenlagerbehälter (15) zuführt und einer Rückluftleitung (6) angeschlossen ist, welche im Bereich der Saugöffnung (27) in das Heizmateriallager (3) einmündet, **dadurch gekennzeichnet, dass** die Saugleitung (5) in den Zyklonabscheider (7) mündet, der über eine Leitung (8) mit der Ansaugseite (9) der Saugturbine (4) verbunden ist und dass die Rücklaufleitung (6) an die Ausgangsseite (10) der Saugturbine (4) angeschlossen ist.

2. Saugförderanlage (1) nach Anspruch 1, **dadurch gekennzeichnet, dass** der Zyklonabscheider (7) in einen Sammelbehälter (13) einmündet, welcher über eine Entleerungsklappe (14) mit einem Zwischenlagerbehälter (15), vorzugsweise einem Zwei-Tagesbehälter, verbunden ist, wobei vorzugsweise im Bereich einer Ausgangsöffnung (16) des Zwischenlagerbehälters (15) eine Dosierschnecke (17) angeordnet ist, welche das Heizmaterial einem Brennertopf (19) zuführt.

3. Saugförderanlage (1) nach einem der Ansprüche 1 bis 2, **dadurch gekennzeichnet, dass** Zyklonabscheider (7), Saugturbine (4) und Sammelbehälter (13) in einem gemeinsamen Gehäuse angeordnet sind, welches auf dem Zwischenlagerbehälter (15) aufsetzbar ist.

4. Saugförderanlage (1) nach einem der Ansprüche 1 bis 3, **dadurch gekennzeichnet, dass** diese als Umluftsystem ausgebildet ist.

5. Saugförderanlage (1) nach einem der Ansprüche 1 bis 4, **dadurch gekennzeichnet, dass** in der Saugleitung (5) ein Umschaltventil angeordnet ist, über welches eine Hauptsaugleitung (5a) wahlweise mit zumindest einer von mehreren Zweigsaugleitungen (5b) verbindbar ist, wobei jede Zweigsaugleitung (5b) zumindest eine Saugöffnung (27) aufweist und die Saugöffnungen (27) in verschiedenen Bereichen des Heizmateriailagers (3) angeordnet sind.

6. Saugförderanlage (1) nach Anspruch 5, **dadurch gekennzeichnet, dass** in der Rückluftleitung (6) ein Umschaltventil angeordnet ist, über welches eine Hauptrückluftleitung (6a) wahlweise mit zumindest einer von mehreren Zweigrückluftleitungen (6b) verbindbar ist, wobei jede Zweigrückluftleitung (6b) zumindest eine Mündungsöffnung (28) aufweist und die Mündungsöffnungen (28) in verschiedenen Bereichen des Heizmateriallagers (3) angeordnet sind.

7. Saugförderanlage (1) nach Anspruch 6, **dadurch gekennzeichnet, dass** das Umschaltventil als Drehschieber (20) ausgebildet ist und über den Drehschieber (20) sowohl die Zweigsaugleitungen (5b), als auch die Zweigrückluftleitungen (6b) umschaltbar sind, wobei der Drehschieber (20) eine Ventilplatte (21) mit zwei vorzugsweise diametral gegenüberliegenden Öffnungen (22, 23) aufweist, von denen in zumindest einer Schieberstellung eine erste Öffnung (22) fluchtend mit einer Zweigsaugleitung (5b) und eine zweite Öffnung (23) fluchtend mit einer Zweigrückluftleitung (6b) zur Verbindung mit der Hauptsaugleitung (5a) bzw. Hauptrückluftleitung (6a) ausgebildet ist.

8. Saugförderanlage (1) nach einem der Ansprüche 1 bis 7, **dadurch gekennzeichnet, dass** die Saugöffnung (27) und die Mündungsöffnung (28) in einer am Boden des Heizmateriallagers (3) befestigten Ansaugsonde (26) angeordnet sind.

9. Saugförderanlage (1) nach Anspruch 8, **dadurch gekennzeichnet, dass** die Mündungsöffnung (28) über der Saugöffnung (27) in einem eine Überdachung (29) aufweisenden Bereich der Ansaugsonde (26) angeordnet sind.

10. Saugförderanlage (1) nach einem der Ansprüche 1 bis 9, **dadurch gekennzeichnet, dass** die Saugförderanlage (1) filterlos ausgeführt ist.

## Claims

1. A vacuum conveyor system (1) for a heating installation for withdrawing solid pourable heating material, especially fuel pellets, from a heating material depot (3), comprising a suction turbine (4) which sucks in the heating material by means of a suction pipe (5) via at least one suction opening (27) and supplies the same via a cyclone separator (7) to a heating furnace (2) or an intermediate storage reservoir (15) and is connected to a return air pipe (6) which opens into the heating material depot (3) in the zone of the suction opening (27), **characterized in that** the suction pipe (5) opens into the cyclone separator (7) which is connected to the suction side (9) of the suction turbine (4) via a conduit (8) and that the return air pipe (6) is connected to the output side (10) of the suction turbine (4).

2. A vacuum conveyor system (1) as claimed in claim 1, **characterized in that** the cyclone separator (7) opens into a collecting reservoir (13) which is connected via a discharge flap (14) with an intermediate storage reservoir (15), preferably a reservoir for two days, with a metering worm (17) being preferably disposed in the zone of an outlet opening (16) of the intermediate storage reservoir (15), which metering worm supplies the heating material to a burner pot (19).

3. A vacuum conveyor system (1) as claimed in one of the claims 1 to 2, **characterized in that** the cyclone separator (7), the suction turbine (4) and the collecting reservoir (13) are arranged in a common housing which can be placed on the intermediate storage reservoir (15).

4. A vacuum conveyor system (1) as claimed in one of the claims 1 to 3, **characterized in that** the same is arranged as a recirculation air system.

5. A vacuum conveyor system (1) as claimed in one of the claims 1 to 4, **characterized in that** a reversing valve is disposed in the suction pipe (5), through which a main suction pipe (5a) can be connected optionally with at least one of several branch suction pipes (5b), with each branch suction pipe (5b) being provided with at least one suction opening (27) and the suction openings (27) being disposed in different zones of the heating material depot (3).

6. A vacuum conveyor system (1) as claimed in claim 5, **characterized in that** a reversing valve is disposed in the return air pipe (6), through which a main return air pipe (6a) can be connected optionally with at least one of several branch return air pipes (6b), with each branch return air pipe (6b) being provided with at least one suction opening (28) and the suction openings (28) being disposed in different zones of the heating material depot (3).

7. A vacuum conveyor system (1) as claimed in claim 6, **characterized in that** the reversing valve is arranged as a rotary slide valve (20) and the rotary slide valve (20) can be used to change over both the branch suction pipes (5b) as well as the branch return air pipes (6b), with the rotary slide valve (20) comprising a valve plate (21) with two preferably diametrically opposite openings (22, 23), of which in at least one slide valve position a first opening (22) is in true alignment with a branch suction pipe (5b) and a second opening (23) is in true alignment with a branch return air pipe (6b) for connection with the main suction pipe (5a) or main return air pipe (6a), respectively.

8. A vacuum conveyor system (1) as claimed in one of the claims 1 to 7, **characterized in that** the suction opening (27) and the mouth opening (28) are disposed in a suction probe (26) fastened to the floor of the heating material depot (3).

9. A vacuum conveyor system (1) as claimed in claim 8, **characterized in that** the mouth opening (28) is disposed above the suction opening (27) in a zone of the suction probe (26) which is provided with a roofing (29).

10. A vacuum conveyor system (1) as claimed in one of the claims 1 to 9, **characterized in that** the vacuum conveyor system (1) is arranged in a filterless manner.

## Revendications

1. Installation de transport par aspiration (1) pour une installation de chauffage afin de prélever des combustibles solides, coulants, notamment des pellets de combustible, hors d'un entrepôt de combustibles (3), munie d'une turbine d'aspiration (4) qui aspire le combustible au moyen d'une conduite d'aspiration (5) à l'aide d'au moins une ouïe d'aspiration (27) et qui alimente une chaudière de chauffage (2) ou un réservoir d'entrepôt intermédiaire (15) à l'aide d'un cyclone dépoussiéreur (7) et qui est raccordée à une conduite d'air de retour (6), laquelle débouche dans la partie de l'ouïe d'aspiration (27) dans l'entrepôt de stockage (3), **caractérisée en ce que** la conduite d'aspiration (5) débouche dans le cyclone dépoussiéreur (7) raccordé au côté d'admission (9) de la turbine d'aspiration (4) à l'aide d'une conduite (8), et **en ce que** la conduite d'air de retour (6) est raccordée au côté sortie (10) de la turbine d'aspiration (4).

2. Installation de transport par aspiration (1) selon la revendication 1, **caractérisée en ce que** le cyclone dépoussiéreur (7) débouche dans un récipient collecteur (13), lequel est raccordé à un réservoir d'entrepôt intermédiaire (15), de préférence un récipient de deux jours, à l'aide d'un clapet de vidange (14), une vis sans fin de dosage (17) étant placée de préférence dans la partie d'une ouverture de sortie (16) du réservoir d'entrepôt intermédiaire (15), laquelle vis alimente le combustible à un brûleur (19).

3. Installation de transport par aspiration (1) selon l'une des revendications 1 à 2, **caractérisée en ce que** le cyclone dépoussiéreur (7), la turbine d'aspiration (4) et le récipient collecteur (13) sont placés dans un boîtier commun, lequel peut être posé sur le réservoir d'entrepôt intermédiaire (15).

4. Installation de transport par aspiration (1) selon l'une des revendications 1 à 3, **caractérisée en ce que** celle-ci est formée comme un système à air pulsé.

5. Installation de transport par aspiration (1) selon l'une des revendications 1 à 4, **caractérisée en ce qu'**une soupape d'inversion est placée dans la conduite d'aspiration (5), à l'aide de laquelle soupape une conduite d'aspiration principale (5a) peut être raccordée à volonté avec au moins l'un de plusieurs branchements d'aspiration (5b), chacun des branchements d'aspiration (5b) présentant au moins une ouïe d'aspiration (27) et les ouïes d'aspiration (27) étant placées dans différentes parties de l'entrepôt de combustibles (3).

6. Installation de transport par aspiration (1) selon la revendication 5, **caractérisée en ce qu'**une soupape d'inversion est placée dans la conduite d'air de retour (6), à l'aide de laquelle soupape une conduite d'air de retour principale (6a) peut être raccordée à volonté avec au moins l'un de plusieurs branchements d'air de retour (6b), chacun des branchements d'air de retour (6b) présentant au moins un orifice (28) et les orifices (28) étant placés dans différentes parties de l'entrepôt de combustibles (3).

7. Installation de transport par aspiration (1) selon la revendication 6, **caractérisée en ce que** la soupape d'inversion est formée comme vanne rotative (20) et que les branchements d'aspiration (5b), aussi bien que les branchements d'air de retour (6b) sont réversibles à l'aide de la vanne rotative (20), la vanne rotative (20) présentant une lame de soupape (21) avec deux ouvertures (22, 23) diamétralement opposées de préférence, à partir desquelles est formée, dans au moins une position coulissante, une première ouverture (22) alignée avec un branchement d'aspiration (5b) et une deuxième ouverture (23) alignée avec un branchement d'air de retour (6b) pour raccordement avec la conduite d'aspiration principale (5a) ou la conduite d'air de retour principale (6a).

8. Installation de transport par aspiration (1) selon l'une des revendications 1 à 7, **caractérisée en ce que** l'ouïe d'aspiration (27) et l'orifice (28) sont placés dans une sonde d'aspiration (26) fixée dans. le fond de l'entrepôt de stockage (3).

9. Installation de transport par aspiration (1) selon la revendication 8, **caractérisée en ce que** l'orifice (28) est placé au-dessus de l'ouïe d'aspiration (27) dans une partie de la sonde d'aspiration (26) présentant un toit (29).

10. Installation de transport par aspiration (1) selon l'une des revendications 1 à 9, **caractérisée en ce que** l'installation de transport par aspiration (1) est réalisée sans filtre.
